# EUROPEAN PATENT APPLICATION

(11) **EP 4 525 153 A1**
(43) Date of publication of application: **19.03.2025**
(21) Application number: 24185298.7
(22) Date of filing: 28.06.2024
(51) Int. Cl.: H01M 50/211, H01M 50/244, H01M 50/271, H01M 50/284, H01M 50/287, H01M 50/298, H01M 50/516, H01M 50/519, H01M 50/533, H01M 50/536, H01M 50/566

(54) **BATTERY ASSEMBLY, ELECTRIC DEVICE AND BATTERY ASSEMBLY PREPARATION METHOD**

(30) Priority: 30.06.2023 CN 202310799429
(71) Applicant: Xiamen Ampack Technology Limited, Xiamen City, Fujian Province 361000 (CN)
(72) Inventor: LI, Ji, Xiamen City, Fujian Province 361000 (CN); WU, Mingjie, Xiamen City, Fujian Province 361000 (CN)
(74) Representative: Icosa

(57) **Abstract**

A battery assembly includes a circuit board, a conductive member and battery cells, the circuit board is provided with a connection region, and the conductive member is connected with the connection region. The battery cells include battery cell housings and electrode terminals, the electrode terminals extend out of the battery cell housings, the parts of the electrode terminals extending out of the battery cell housings include welding sections, and the welding sections are welded with the conductive member. In a first direction, the welding sections, the conductive member and the connection region are arranged; and viewed in an opposite direction of the first direction, the circuit board covers the welding sections.

## Description

### TECHNICAL FIELD

This application relates to the technical field of energy storage, and in particular, to a battery assembly, an electric device and a battery assembly preparation method.

### BACKGROUND

Currently, electrode terminals of battery cells in a battery assembly are usually connected with a circuit board by perforation welding, that is, the electrode terminals pass through via holes in the circuit board and then are welded to the circuit board. This connection method requires that the design and use of welding fixtures are more complex, the assembly efficiency of the battery assembly is lower, and via holes need to be provided in the circuit board, resulting in the reduction of structural strength of the circuit board and the existence of security risks, also leading to the reduction of the board layout area of the circuit board, and resulting in the increase of the area of the circuit board.

### SUMMARY

In view of the foregoing situation, it is necessary to provide a battery assembly to simplify a connection process between electrode terminals and a circuit board, improve the assembly efficiency, and increase the board layout area and structural strength of the circuit board.

An embodiment of this application provides a battery assembly, including a circuit board, a conductive member and battery cells, the circuit board is provided with a connection region, and the conductive member is connected with the connection region. The battery cells include battery cell housings and electrode terminals, the electrode terminals extend out of the battery cell housings, the parts of the electrode terminals extending out of the battery cell housings include welding sections, and the welding sections are welded with the conductive member. The welding sections, the conductive member and the connection region are arranged in the first direction; and viewed in an opposite direction of the first direction, the circuit board covers the welding sections.

In the above-mentioned battery assembly, the welding sections of the electrode terminals are electrically connected to the circuit board by being welded with the conductive member, the welding sections, the conductive member and the connection region of the circuit board are arranged in the first direction, viewed in the opposite direction of the first direction, the circuit board covers the welding sections, so that the electrode terminals do not need to pass through the circuit board when being connected to the circuit board, but may be connected with the conductive member on one side of the circuit board, which is not only conducive to simplifying the connection process between the electrode terminals and the circuit board, but also improving the assembly efficiency of the battery assembly. Via holes are reduced on the circuit board, which is conducive to improving the structural strength of the circuit board and increasing the board layout area of the circuit board.

In some embodiments of this application, the battery cell housing includes a body portion and a top sealing portion which are connected to each other, the electrode terminals extend out of the top sealing portion, the body portion includes a first side face and a second side face, the first side face and the second side face are respectively located on opposite sides of the body portion in the second direction, and the second direction is perpendicular to the first direction. In the second direction, a distance between the top sealing portion and the first side face is greater than a distance between the top sealing portion and the second side face, that is, the first side face is a deep pit face of the battery cell. The battery assembly includes two battery cells, first side faces of the two battery cells face each other in the second direction, that is, the deep pit faces of the two battery cells face each other, which is conducive to increasing a distance between the top sealing portions of the two battery cells, and in turn, conducive to connecting the electrode terminals of the two battery cells bent towards each other in the second direction with the circuit board, which is not only conducive to increasing the assembly space and improving the assembly efficiency, but also conductive to reducing the mutual influence when the adjacent electrode terminals are bent in the second direction, thereby being conductive to reducing the influence of bending on the electrode terminals.

In some embodiments of this application, the body portion further includes a first end face and a second end face, the first end face and the second end face are respectively located on the opposite sides of the top sealing portion in the second direction, the first end face is connected to the first side face, and the second end face is connected to the second side face. In the first direction, a projection of the welding sections overlaps a projection of the first end face, and the projection of the welding sections is apart from a projection of the second end face, so that the electrode terminals of the two battery cells bent towards each other in the second direction are connected to the circuit board, which is not only conducive to increasing the assembly space and improving the assembly efficiency, but also conductive to reducing the mutual influence when the adjacent electrode terminals are bent in the second direction, thereby being conductive to reducing the influence of bending on the electrode terminals.

In some embodiments of this application, the battery assembly further includes a shell, the shell includes an accommodation cavity, the circuit board, the conductive member and the battery cells are located in the accommodation cavity, the shell includes a first limiting portion and a second limiting portion, the first limiting portion and the second limiting portion are arranged in the second direction, and the part of the circuit board is located between the first limiting portion and the second limiting portion. The first limiting portion and the second limiting portion can play a limiting role on the circuit board to limit the movement of the circuit board in the second direction or a direction opposite to the second direction, which is conducive to improving the seismic performance of the battery assembly, and also reducing the influence of the circuit board shaking on the electrode terminals, thereby improving the safety performance of the battery assembly.

In some embodiments of this application, in the second direction, a first gap is provided between the circuit board and the first limiting portion, and the first gap is configured to move the circuit board relative to the shell in the second direction. When the battery cell moves relative to the shell, the first gap allows the circuit board to move relative to the shell, which is conducive to reducing the pulling force of the movement of the battery cell on the electrode terminals and reducing the risk of the damage of the electrode terminals.

In some embodiments of this application, in the second direction, a second gap is provided between the circuit board and the first limiting portion, and the second gap is configured to move the circuit board in the second direction relative to the shell. When the battery cell moves relative to the shell, the second gap allows the circuit board to move relative to the shell, which is conducive to reducing the pulling force of the movement of the battery cell on the electrode terminal and reducing the risk of the damage of the electrode terminals.

In some embodiments of this application, the shell further includes a third limiting portion and a fourth limiting portion; the third limiting portion and the fourth limiting portion are arranged in the first direction, and the part of the circuit board is located between the third limiting portion and the fourth limiting portion. The third limiting portion and the fourth limiting portion may play a limiting role on the circuit board to limit the movement of the circuit board in the second direction or a direction opposite to the second direction, which is conducive to improving the seismic performance of the battery assembly, and also reducing the influence of the circuit board shaking on the electrode terminals, thereby improving the safety performance of the battery assembly.

In some embodiments of this application, in the first direction, a third gap is provided between the circuit board and the third limiting portion, and the third gap is configured to move the circuit board relative to the shell in the first direction. When the battery cell moves relative to the shell, the third gap allows the circuit board to move relative to the shell, which is conducive to reducing the pulling force of the movement of the battery cell on the electrode terminals and reducing the risk of the damage of the electrode terminals.

In some embodiments of this application, in the first direction, a fourth gap is provided between the circuit board and the fourth limiting portion, and the fourth gap is configured to move the circuit board relative to the shell in the opposite direction of the first direction. When the battery cell moves relative to the shell, the fourth gap allows the circuit board to move relative to the shell, which is conducive to reducing the pulling force of the movement of the battery cell on the electrode terminals and reducing the risk of the damage of the electrode terminals.

In some embodiments of this application, the shell further includes a fifth limiting portion and a sixth limiting portion, the fifth limiting portion and the sixth limiting portion are arranged in the third direction, and the part of the circuit board is located between the fifth limiting portion and the sixth limiting portion. The third direction is simultaneously perpendicular to the first direction and the second direction. The fifth limiting portion and the sixth limiting portion may play a limiting role on the circuit board to limit the movement of the circuit board in the third direction or a direction opposite to the third direction, which is conducive to improving the seismic performance of the battery assembly, and also reducing the influence of the circuit board shaking on the electrode terminals, thereby improving the safety performance of the battery assembly.

In some embodiments of this application, in the third direction, a fifth gap is provided between the circuit board and the fifth limiting portion, and the fifth gap is configured to move the circuit board relative to the shell in the third direction. When the battery cell moves relative to the shell, the fifth gap allows the circuit board to move relative to the shell, which is conducive to reducing the pulling force of the movement of the battery cell on the electrode terminals and reducing the risk of the damage of the electrode terminals.

In some embodiments of this application, in the third direction, a sixth gap is provided between the circuit board and the sixth limiting portion, and the sixth gap is configured to move the circuit board relative to the shell in the opposite direction of the third direction. When the battery cell moves relative to the shell, the sixth gap allows the circuit board to move relative to the shell, which is conducive to reducing the pulling force of the movement of the battery cell on the electrode terminals and reducing the risk of the damage of the electrode terminals.

In some embodiments of this application, the connection region includes a first connection region and a second connection region, the first connection region and the second connection region are arranged in the second direction, and the second direction is perpendicular to the first direction. The conductive member includes a first conductive member and a second conductive member, the first conductive member is connected to the first connection region, and the second conductive member is connected to the second connection region. The battery assembly includes two battery cells, battery cell housings of the two battery cells are arranged in the second direction, welding sections of one battery cell are connected to the first conductive member, and welding sections of the other battery cell are connected to the second conductive member, which is conductive to increasing the capacity of the battery assembly, but also conducive to using the space of the circuit board in the second direction, thereby improving the space utilization of the circuit board.

In some embodiments of this application, the connection region includes a third connection region and a fourth connection region, the third connection region and the fourth connection region are arranged in the third direction, and the third direction is perpendicular to the first direction. The conductive member includes a third conductive member and a fourth conductive member, the third conductive member is connected to the third connection region, and the fourth conductive member is connected to the fourth connection region. The battery assembly includes two battery cells, battery cell housings of the two battery cells are arranged in the third direction, welding sections of one battery cell are connected to the third conductive member, and welding sections of the other battery cell are connected to the fourth conductive member, which is conductive to increasing the capacity of the battery assembly, but also conducive to using the space of the circuit board in the third direction, thereby improving the space utilization of the circuit board.

In some embodiments of this application, the connection region includes a fifth connection region and a sixth connection region, and the fifth connection region and the sixth connection region are located on two sides of the circuit board in the first direction. The conductive member includes a fifth conductive member and a sixth conductive member, the fifth conductive member is connected to the fifth connection region, and the sixth conductive member is connected to the sixth connection region. The battery assembly includes two battery cells, battery cell housings of the two battery cells are arranged in the second direction, welding sections of one battery cell are connected to the fifth conductive member, and welding sections of the other battery cell are connected to the sixth conductive member, which is not only conductive to increasing the capacity of the battery assembly, but also conducive to using the space of both sides of the circuit board in the first direction, thereby improving the space utilization of the circuit board. The second direction is perpendicular to the first direction.

In some embodiments of this application, the connection region includes a seventh connection region; the conductive member includes a seventh conductive member, and the seventh conductive member is connected to the seventh connection region. The battery assembly includes two battery cells, battery cell housings of the two battery cells are arranged in the second direction, the second direction is perpendicular to the first direction, and welding sections of the two battery cells are connected to each other and stacked in the seventh conductive member in the first direction, which is not only conductive to increasing the capacity of the battery assembly, but also conducive to reducing the influence of the connection region on the board layout area of the circuit board, thereby improving the space utilization of the circuit board.

In some embodiments of this application, the connection region includes an eighth connection region and a ninth connection region. The conductive member includes an eighth conductive member and a ninth conductive member, the eighth conductive member is connected to the eighth connection region, and the ninth conductive member is connected to the ninth connection region. The battery assembly includes two battery cells, battery cell housings of the two battery cells are arranged in the second direction, welding sections of one battery cell are connected to the eighth conductive member, welding sections of the other battery cell are connected to the ninth conductive member, and the second direction is perpendicular to the first direction. In the first direction, neither of the projections of the welding sections of the two battery cells overlap, which is not only conductive to increasing the capacity of the battery assembly, but also conducive to reducing the mutual influence between different welding sections, providing more electrical connections for the battery cells.

In some embodiments of this application, the circuit board is a rigid printed circuit board or a flexible printed circuit board.

In some embodiments of this application, in the first direction, a thickness of the conductive member is d1, where 0.3 mm ≤ d1 ≤ 2 mm. The welding sections, the conductive member and the connection region are welded in a sequentially stacked mode, without affecting the welding effect, which may properly increase the thickness of the conductive member, and in turn, is conducive to improving the current-carrying capacity of the conductive member and relieving the temperature rise problem of the conductive member, and improving the over-current performance between the electrode terminals and the circuit board.

In some embodiments of this application, 1.3 mm ≤ d1 ≤ 1.6 mm, which is conductive to further taking into account the welding effect between the welding sections and the second conductive member, and improving the current-carrying capacity of the conductive member and relieving the temperature rise problem of the conductive member.

An embodiment of this application further provides an electric device, including the battery assembly described in any of the above embodiments.

In the above-mentioned electric device, the welding sections of the electrode terminals on the battery cells are electrically connected to the circuit board by being welded with the conductive member. The welding sections, the conductive member and the connection region of the circuit board are arranged in the first direction. Viewed in the opposite direction of the first direction, the circuit board covers the welding sections, so that the electrode terminals do not need to pass through the circuit board when being connected to the circuit board, but may be connected with the conductive member on one side of the circuit board, which is not only conducive to simplifying the connection process between the electrode terminals and the circuit board and improving the assembly efficiency of the battery assembly, but also reducing the influence of assembly cost of the battery assembly on the electric device. Via holes are reduced on the circuit board, which is conducive to improving the structural strength of the circuit board and increasing the board layout area of the circuit board, improving the space utilization of the battery assembly, and reducing the influence of the volume of the battery assembly on the electric device.

An embodiment of this application further provides a battery assembly preparation method, used for preparing the battery assembly in any one of the above embodiments. The method includes the steps of placing the circuit board: the circuit board is placed on the fixture, the circuit board is provided with the connection region, and the connection region is provided with the conductive member; placing the battery cells: the welding sections of the electrode terminals on the battery cells are connected to the conductive member, so that the welding sections, the conductive member and the connection region are arranged in a thickness direction of the circuit board; welding the electrode terminals: the welding sections are welded in the thickness direction of the circuit board, so that the welding sections are welded to the conductive member; and bending the electrode terminals: the battery cells are turned over, and the electrode terminals are bent, so that the battery cell housings of the battery cells and the circuit board are arranged in the thickness direction of the circuit board.

In the above-mentioned the battery assembly preparation method, the welding sections of the electrode terminals, the conductive member and the connection region of the circuit board are arranged in the thickness direction of the circuit board, and the welding sections are welded, so that the circuit board does not need to be provided with via holes to allow the electrode terminals to perforate for welding, which is not only conducive to simplifying the connection process between the electrode terminals and the circuit board and improving the assembly efficiency of the battery assembly, but also conducive to improving the structural strength of the circuit board and increasing the board layout area of the circuit board, thereby improving the space utilization of the battery assembly.

In some embodiments of this application, in the thickness direction of the circuit board, a thickness of the conductive member is greater than or equal to 0.3 mm and less than or equal to 2 mm. Through the above-mentioned method for preparing the battery assembly, the thickness of the conductive member can be appropriately increased without affecting the welding effect, which is conducive to improving the current-carrying capacity of the conductive member and relieving the temperature rise problem of the conductive member, and improving the over-current performance between the electrode terminals and the circuit board.

### BRIEF DESCRIPTION OF DRAWINGS

FIG. 1 is a schematic structural diagram of a battery assembly according to an embodiment of this application;
FIG. 2 is an exploded view of a battery assembly according to an embodiment of this application;
FIG. 3 is a schematic structural diagram of a battery cell connected with a circuit board according to an embodiment of this application;
FIG. 4 is a view of a structure in which a battery cell is connected with a circuit board in an opposite direction of a first direction according to an embodiment of this application;
FIG. 5 is an exploded view before a battery cell is connected with a circuit board according to an embodiment of this application;
FIG. 6 is a state diagram in the process of connecting a battery cell with a circuit board according to an embodiment of this application;
FIG. 7 is a dorsal view of a structure shown in FIG. 5;
FIG. 8 is a schematic structural diagram of a battery cell according to an embodiment of this application;
FIG. 9 is a view of a battery cell in the opposite direction of the first direction according to an embodiment of this application;
FIG. 10 is one state diagram of a battery cell before assembling according to an embodiment of this application;
FIG. 11 is a view of a structure in which a battery cell is connected with a circuit board in a third direction according to an embodiment of this application;
FIG. 12 is a schematic structural diagram of a battery cell connected with a circuit board according to an embodiment of this application;
FIG. 13 is a view of a structure after omitting a circuit board shown in FIG. 12 in the opposite direction of the first direction;
FIG. 14 is one state diagram in the process of connecting a battery cell with a circuit board according to an embodiment of this application;
FIG. 15 is an exploded view of a structure shown in FIG. 13.
FIG. 16 is a view of a structure in which a battery cell is connected with a circuit board in a second direction according to an embodiment of this application;
FIG. 17 is a state diagram in the process of connecting a battery cell with a circuit board according to an embodiment of this application;
FIG. 18 is a view of a structure in which a battery cell is connected with a circuit board in a third direction according to an embodiment of this application;
FIG. 19 is a state diagram in the process of connecting a battery cell with a circuit board according to an embodiment of this application;
FIG. 20 is a view of a structure in which a battery cell is connected with a circuit board in the third direction according to an embodiment of this application;
FIG. 21 is a state diagram in the process of connecting a battery cell with a circuit board according to an embodiment of this application;
FIG. 22 is a view of a structure in which a battery cell is connected with a circuit board in the third direction according to an embodiment of this application;
FIG. 23 is a partial schematic structural diagram of a battery assembly according to an embodiment of this application;
FIG. 24 is a schematic structural diagram of a first housing according to an embodiment of this application;
FIG. 25 is a view of a partial structure of a battery assembly in a second direction according to an embodiment of this application;
FIG. 26 is a schematic structural diagram of a second housing according to an embodiment of this application;
FIG. 27 is a view of a second housing in a second direction according to an embodiment of this application;
FIG. 28 is a schematic structural diagram of an electric device according to an embodiment of this application; and
FIG. 29 is a flow diagram of a battery assembly preparation method according to an embodiment of this application.

### DESCRIPTION OF REFERENCE SIGNS OF MAIN COMPONENTS

| | |
|---|---|
| Battery assembly | 100 |
| Shell | 10 |
| First housing | 11 |
| First limiting portion | 111 |
| Second housing | 12 |
| Second limiting portion | 121 |
| Third limiting portion | 123 |
| Fourth limiting portion | 124 |
| Fifth limiting portion | 125 |
| Sixth limiting portion | 126 |
| Accommodation cavity | 14 |
| Circuit board | 20 |
| Connection region | 21 |
| First connection region | 211 |
| Second connection region | 212 |
| Third connection region | 213 |
| Fourth connection region | 214 |
| Fifth connection region | 215 |
| Sixth connection region | 216 |
| Seventh connection region | 217 |
| Eighth connection region | 218 |
| Ninth connection region | 219 |
| Conductive member | 30 |
| First conductive member | 31 |
| Second conductive member | 32 |
| Third conductive member | 33 |
| Fourth conductive member | 34 |
| Fifth conductive member | 35 |
| Sixth conductive member | 36 |
| Seventh conductive member | 37 |
| Eighth conductive member | 38 |
| Ninth conductive member | 39 |
| Battery cell | 40 |
| Battery cell housing | 41 |
| Body portion | 411 |
| First side face | 4111 |
| Second side face | 4112 |
| First end face | 4113 |
| Second end face | 4114 |
| Edge sealing portion | 412 |
| Top sealing portion | 4121 |
| Side sealing portion | 4122 |
| Electrode terminal | 42 |
| Positive terminal | 421 |
| Negative terminal | 422 |
| Welding section | 423 |
| Electrode assembly | 43 |
| Electric device | 200 |
| First direction | X |
| Second direction | Y |
| Third direction | Z |

This application is further described below with reference to the following specific embodiments and the foregoing drawings.

### DETAILED DESCRIPTION OF EMBODIMENTS

The following describes the technical solutions in the embodiments of this application with reference to the drawings hereto. Evidently, the described embodiments are merely a part of but not all of the embodiments of this application.

It is hereby noted that when one component is referred to as being "connected to" another component, it may be directly connected to the another component, or there may be a component disposed therebetween. When one component is referred to as being "disposed on" another component, it may be directly disposed on the another component, or there may be a component disposed therebetween. In this application, unless otherwise expressly specified and limited, the term "connected" may be understood in a broad sense, for example, it may be a fixed connection, or a removable connection, or an integral connection; it may be a mechanical connection or an electrical connection; and it may be a direct connection or indirect connection through an intermediate medium, and may be the interior communication between two components. For a person of ordinary skill in the art, the specific meaning of the forgoing terms in this application may be understood according to specific circumstances. The terms "and/or" as used herein includes any and all combinations of one or more related listed items.

Unless otherwise defined, all technical and scientific terms used herein have the same meanings as commonly understood by a person skilled in the technical field to which this application pertains. The terms used in the specification of this application are merely intended to describe specific embodiments but not to limit this application. The terms "comprise" and "have" and any other variations thereof in the specification, claims and the accompanying drawings of this application are open writing, which is intended to cover non-exclusive inclusions.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

Reference herein to "embodiment(s)" means that specific features, structures or characteristics described with reference to the embodiment(s) may be incorporated in at least one embodiment of this application. The word "embodiment(s)" appearing in various positions in the specification does not necessarily refer to the same embodiment or an independent or alternative embodiment that is exclusive of other embodiments. The implementations in this application may be combined without conflict.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application.

An embodiment of this application provides a battery assembly, including a circuit board, a conductive member and battery cells, the circuit board is provided with a connection region, and the conductive member is connected with the connection region. The battery cells include battery cell housings and electrode terminals, the electrode terminals extend out of the battery cell housings, the parts of the electrode terminals extending out of the battery cell housings include welding sections, and the welding sections are welded with the conductive member. The welding sections, the conductive member and the connection region are arranged in the first direction; and viewed in an opposite direction of the first direction, the circuit board covers the welding sections.

In the above-mentioned battery assembly, the welding sections of the electrode terminals are electrically connected to the circuit board by being welded with the conductive member, the welding sections, the conductive member and the connection region of the circuit board are arranged in the first direction, viewed in the opposite direction of the first direction, the circuit board covers the welding sections, so that the electrode terminals do not need to pass through the circuit board when being connected to the circuit board, but may be connected with the conductive member on one side of the circuit board, which is not only conducive to simplifying the connection process between the electrode terminals and the circuit board, but also improving the assembly efficiency of the battery assembly. Via holes are reduced on the circuit board, which is conducive to improving the structural strength of the circuit board and increasing the board layout area of the circuit board.

Embodiments of this application are further illustrated below with reference to the accompanying drawings.

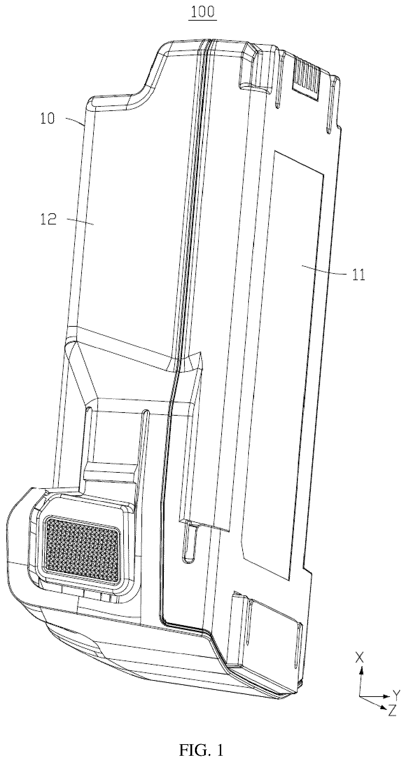

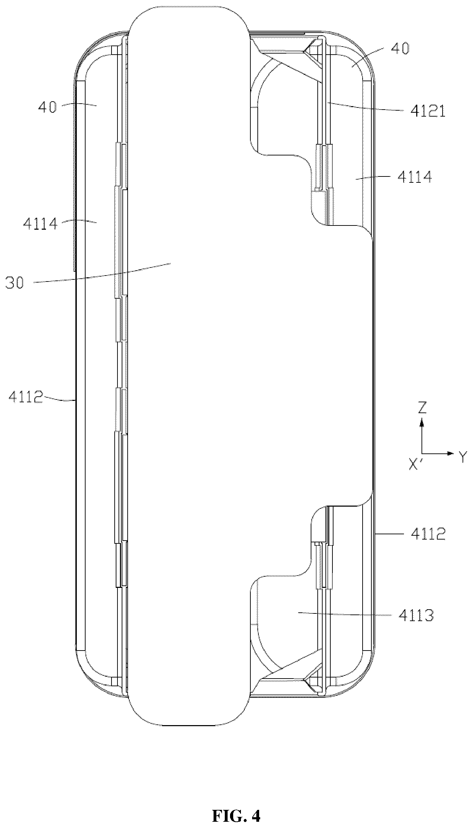

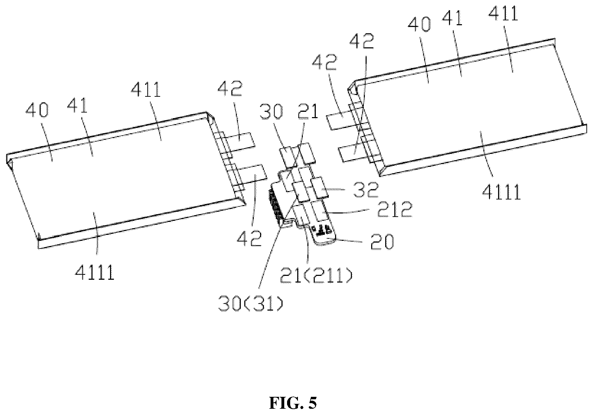

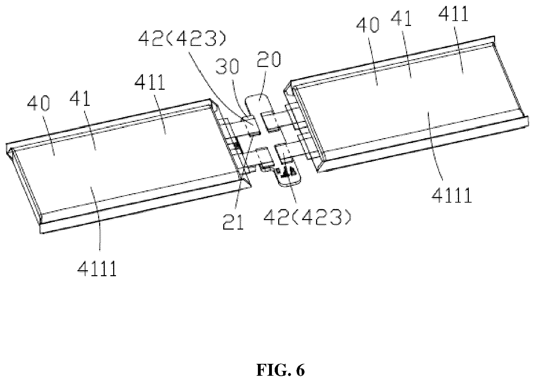

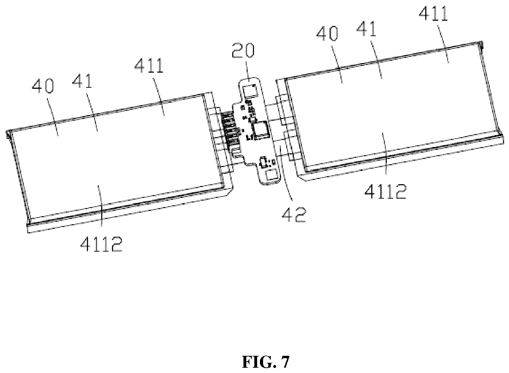

As shown in FIG. 1 to 7, an embodiment of this application provides a battery assembly 100, including a circuit board 20, a conductive member 30, and battery cells 40, the circuit board 20 is provided with a connection region 21, and the conductive member 30 is connected to the connection region 21. The battery cells 40 include battery cell housings 41 and electrode terminals 42, the electrode terminals 42 extend out of the battery cell housings 41, the parts of the electrode terminals 42 extending out of the battery cell housings 41 include welding sections 423, and the welding sections 423 are welded with the conductive member 30. In a first direction X, the welding sections 423, the conductive member 30 and the connection region 21 are arranged; and viewed in a direction X' opposite to the first direction X, the circuit board 20 covers the welding sections 423.

In the above-mentioned battery assembly 100, the welding sections 423 of the electrode terminals 42 are electrically connected to the circuit board 20 by being welded with the conductive member 30, the welding sections 423, the conductive member 30 and the connection region 21 of the circuit board 20 are arranged in the first direction X, and viewed in a direction X' opposite to the first direction X, the circuit board 20 covers the welding sections 423, so that the electrode terminals 42 do not need to pass through the circuit 20 board when being connected to the circuit board 20, but may be connected with the conductive member 30 on one side of the circuit board 20, which is not only conducive to simplifying the connection process between the electrode terminals 42 and the circuit board 20, but also improving the assembly efficiency of the battery assembly 100. Via holes are also reduced on the circuit board 20, which is conductive to improving the structural strength of the circuit board 20 and increasing the board layout area of the circuit board 20.

In one embodiment, in an assembly process of the battery assembly 100 of this application, the circuit board 20 may be first placed on a fixture, so that the connection region 21 faces up, and then the conductive member 30 and the electrode terminals 42 of the battery cells 40 are successively stacked on the connection region 21, so that the welding sections 423 of the electrode terminals 42, the conductive member 30 and the connection region 21 are arranged in a thickness direction of the circuit board 20, through the welding process, the welding sections 423 are connected to the conductive member 30, and then the battery cells 40 are turned over, so that the electrode terminals 42 are bent and different battery cell housings 41 are arranged. The assembly process is conductive to improving the assembly efficiency of the battery assembly 100, and there is no need to provide holes in the circuit board 20 for the electrode terminals 42 to pass through, which is conductive to improving the structural strength of the circuit board 20 and increasing the board layout area of the circuit board 20.

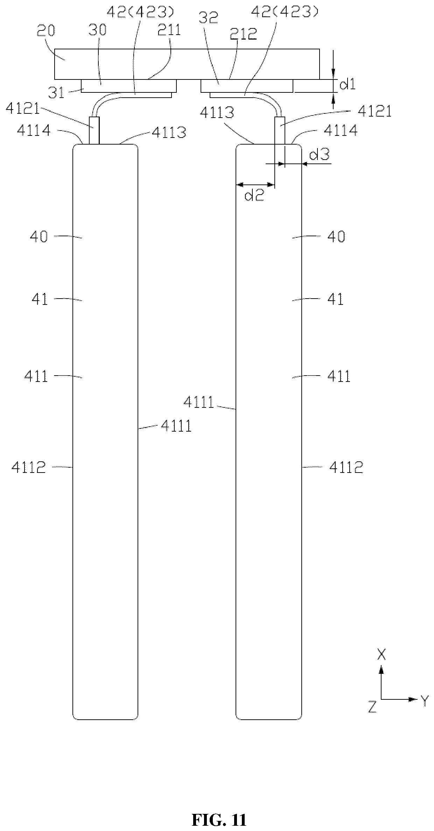

In one embodiment, in the first direction X, a thickness of the conductive member 30 is d1 (as shown in FIG. 11), and 0.3 mm ≤ d1 ≤ 2 mm. The welding sections 423, the conductive member 30 and the connection region 21 are welded in a sequentially stacked mode. The thickness of the conductive member 30 can be properly increased without affecting a welding effect, which is further conducive to improving the current-carrying capacity of the conductive member 30 and relieving the temperature rise problem of the conductive member 30, and improving the over-current performance between the electrode terminals 42 and the circuit board 20.

In one embodiment, 1.3 mm ≤ d1 ≤ 1.6 mm, which is conductive to further taking into account a welding effect between the welding sections 423 and a second conductive member 32, and improving the current-carrying capacity of the conductive member 30 and relieving the temperature rise problem of the conductive member 30.

In one embodiment, a thickness d1 of the conductive member 30 is any one of 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm and 2 mm, which is conductive to improving the current-carrying capacity of the conductive member 30 and relieving the temperature rise problem of the conductive member 30, and improving the over-current performance between the electrode terminals 42 and the circuit board 20.

In one embodiment, a material of the conductive member 30 includes, but is not limited to, any of nickel, copper or copper-nickel alloy, which is conducive to improving the current-carrying capacity of the conductive member 30 and relieving the temperature rise problem of the conductive member 30, and improving the over-current performance between the electrode terminals 42 and the circuit board 20.

In one embodiment, the conductive member 30 is welded with the connection region 21, which is conductive to improving the stability of the conductive member 30 connected to the circuit board 20 and improving the seismic performance of the battery assembly 100.

In one embodiment, a welding process includes, but is not limited to, either laser welding or electric resistance welding.

In one embodiment, a metal surface is exposed to the connection region, so that the conductive member 30 is welded to the metal surface to be connected to the circuit board 20. In one embodiment, the conductive member 30 and the circuit board 20 are integrally formed, and the connection region 21 is a region of the circuit board 20 connected to the conductive member 30.

In one embodiment, the circuit board 20 is a rigid printed circuit board 20 (referred to as PCB) or a flexible printed circuit board 20 (referred to as FPC).

In one embodiment, the circuit board 20 includes a plurality of electronic components. The plurality of electronic components can implement functions of data collection, control, protection, communication, electric quantity calculation, signal transmission, and power transfer and the like for the battery cells 40. Collected data of the battery cells 40 include voltage, current, resistance, temperature and the like.

In one embodiment, the battery assembly 100 further includes a shell 10, the shell 10 is provided with an accommodation cavity 14, the circuit board 20, the conductive member 30 and the battery cells 40 are located in the accommodation cavity 14, and the shell 10 protects the circuit board 20, the conductive member 30 and the battery cells 40.

In one embodiment, the shell 10 includes a first housing 11 and a second housing 12, the first housing 11 and the second housing 12 are arranged in a second direction Y, and the first housing 11 and the second housing 12 are connected to each other and form the accommodation cavity 14 accommodating the circuit board 20, the conductive member 30 and the battery cells 40, where the second direction Y is perpendicular to the first direction X.

In one embodiment, the first housing 11 and the second housing 12 are made of plastic, which is conductive to reducing the weight of the shell 10 and reducing the influence of the weight of the shell 10 on the battery assembly 100.

In one embodiment, the first housing 11 and the second housing 12 are made of metal, which is conductive to improving the structural strength and stiffness of the shell 10, reducing the risk of deformation or damage of the shell 10, and improving the safety performance of the battery assembly 100. In one embodiment, the first housing 11 and the second housing 12 are made of aluminum.

In one embodiment, the first housing 11 is connected to the second housing 12 by a clip or a fastener.

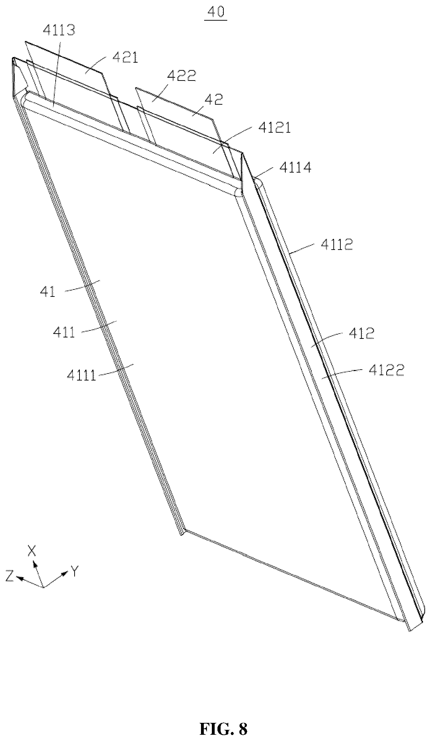

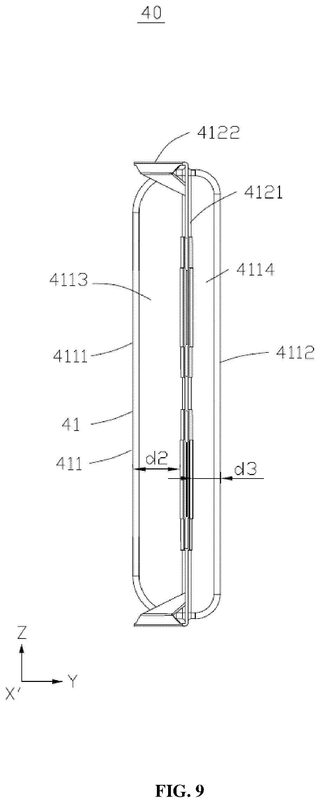

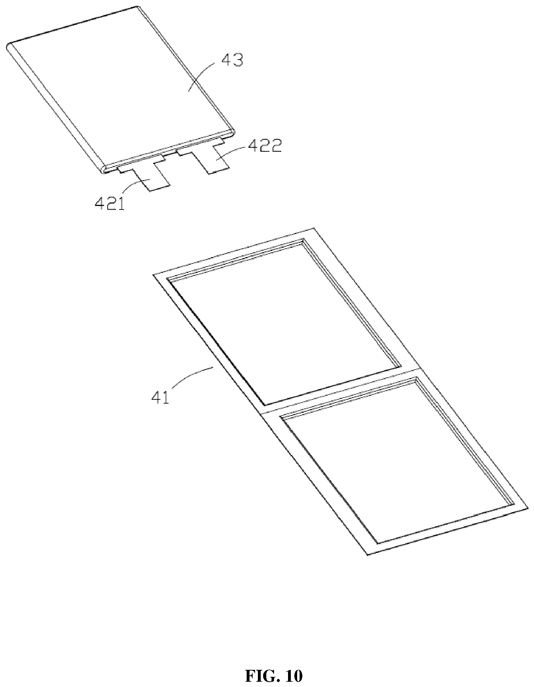

As shown in FIG. 8 to FIG. 10, in one embodiment, the battery cells 40 further include electrode assemblies 43, the electrode assemblies 43 are disposed in the battery cell housings 41, and parts of the electrode terminals 42 are located in the battery cell housings 41 and connected to the electrode terminals 42.

In one embodiment, each battery cell housing 41 includes a body portion 411 and an edge sealing portion 412, the edge sealing portion 412 is connected to and extends from the body portion 411, and the electrode assembly 43 is arranged in the body portion 411.

In one embodiment, the edge sealing portion 412 includes a top sealing portion 4121 and a side sealing portion 4122 connected to each other, the top sealing portion 4121 is located at an end portion of the battery cell housing 41 in the first direction X, the side sealing portion 4122 is located at an end portion of the battery cell housing 41 in a third direction Z, the electrode terminals 42 extend from the top sealing portion 4121, and the parts of the electrode terminals 42 extending from the top sealing portion 4121 includes the welding sections 423. The third direction Z is perpendicular to both the first direction X and the second direction Y.

The electrode terminals 42 include a positive terminal 421 and a negative terminal 422. The electrode assembly 43 includes a positive electrode plate, a negative electrode plate and a separator (not shown in the figures), the separator is arranged between the positive electrode plate and the negative electrode plate, the positive electrode plate, the separator and the negative electrode plate are wound or stacked to form the electrode assembly 43, the positive terminal 421 is connected to the positive electrode plate, and the negative terminal 422 is connected to the negative electrode plate.

In one embodiment, the body portion 411 includes a first side face 4111 and a second side face 4112, and the first side face 4111 and the second side face 4112 are respectively located on two opposite sides of the body portion 411 in the second direction Y.

In the second direction Y, a distance between the top sealing portion 4121 and the first side face 4111 is d2, a distance between the top sealing portion 4121 and the second side face 4112 is d3, d2 > d3, that is, the first side face 4111 is a deep pit face of the battery cell 40, and the second side face 4112 is a shallow pit face of the battery cell 40.

The body portion 411 further includes a first end face 4113 and a second end face 4114, the first end face 4113 and the second end face 4114 are located at an end portion of the body portion 411 in the first direction X, and are respectively located on two opposite sides of the top sealing portion 4121 in the second direction Y, the first end face 4113 is connected to the first side face 4111, and the second end face 4114 is connected to the second side face 4112.

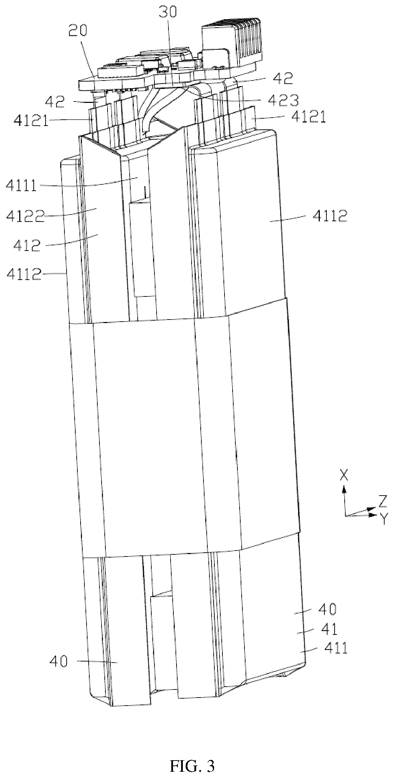

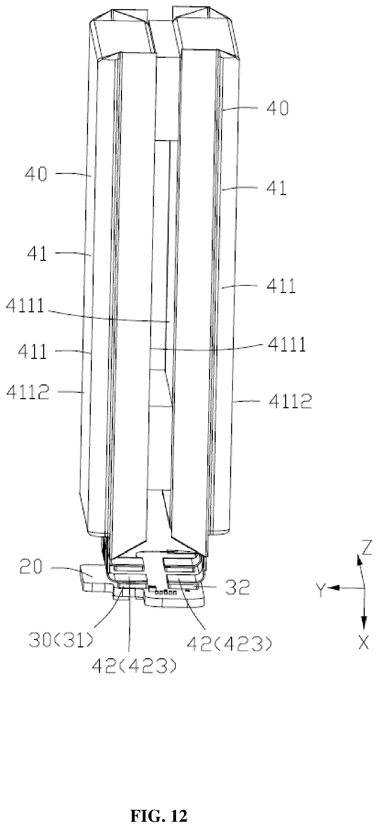

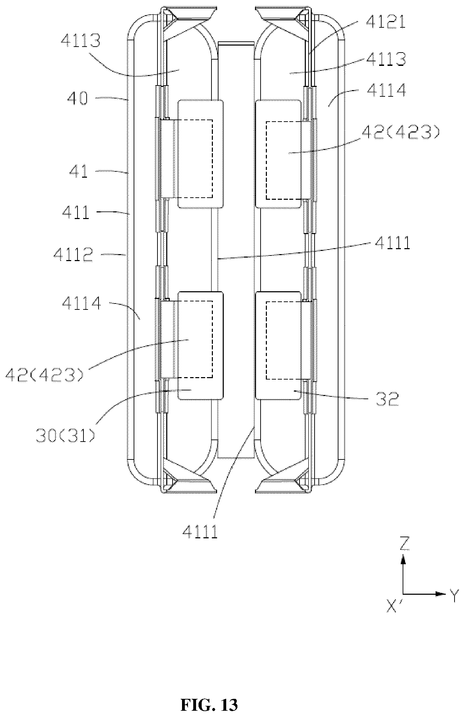

As shown in FIG. 3 to FIG. 6 and FIG. 11 to FIG. 13, in one embodiment, the connection region 21 includes a first connection region 211 and a second connection region 212, and the first connection region 211 and the second connection region 212 are arranged in the second direction Y.

The conductive member 30 includes a first conductive member 31 and a second conductive member 32, the first conductive member 31 is connected to the first connection region 211, and the second conductive member 32 is connected to the second connection region 212.

The battery assembly 100 includes two battery cells 40, the body portions 411 of the two battery cells 40 are arranged in the second direction Y, the welding sections 423 of one battery cell 40 are connected to the first conductive member 31, and the welding sections of the other battery cell 40 are connected to the second conductive member 32, which is not only conductive to increasing the capacity of the battery assembly 100, but also conducive to using the space of the circuit 20 board in the second direction Y, thereby improving the space utilization of the circuit board 20.

In one embodiment, the number of first connection regions 211 is two, and the two first connection regions 211 are arranged in a third direction Z. The number of second connection regions 212 is two, and the two second connection regions 212 are arranged in the third direction Z. A positive terminal 421 of one battery cell 40 is connected to one first connection region 211, and a negative terminal 422 of the battery cell 40 is connected to the other first connection region 211. A positive terminal 421 of the other battery cell 40 is connected to one second connection region 212, and a negative terminal 422 of the battery cell 40 is connected to the other second connection region 212.

In one embodiment, the first side faces 4111 of two battery cells 40 face each other in the second direction Y, that is, deep pit faces of the two battery cells 40 face each other, which is conducive to increasing a distance between the top sealing portions 4121 of the two battery cells 40, and in turn, conducive to connecting the electrode terminals 42 of the two battery cells 40 bent towards each other in the second direction Y with the circuit board 20, which is not only conducive to increasing the assembly space and improving the assembly efficiency, but also reducing the mutual influence when the adjacent electrode terminals 42 are bent in the second direction Y, thereby being conductive to reducing the influence of bending on the electrode terminals 42.

In one embodiment, in the first direction X, a projection of the welding sections 423 overlaps a projection of the first end face 4113, and a projection of the welding sections 423 is apart from a projection of the second end face 4114, so that the electrode terminals 42 of the two battery cells 40 are bent towards each other in the second direction Y to be connected with the circuit board 20, which is not only conducive to improving the assembly efficiency, but also decreasing the mutual influence when the adjacent electrode terminals 42 are bent towards each other in the second direction Y, thereby being conductive to reducing the influence of bending on the electrode terminals 42.

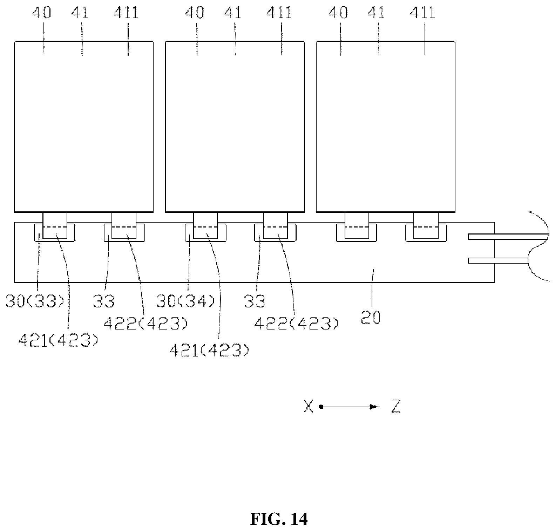

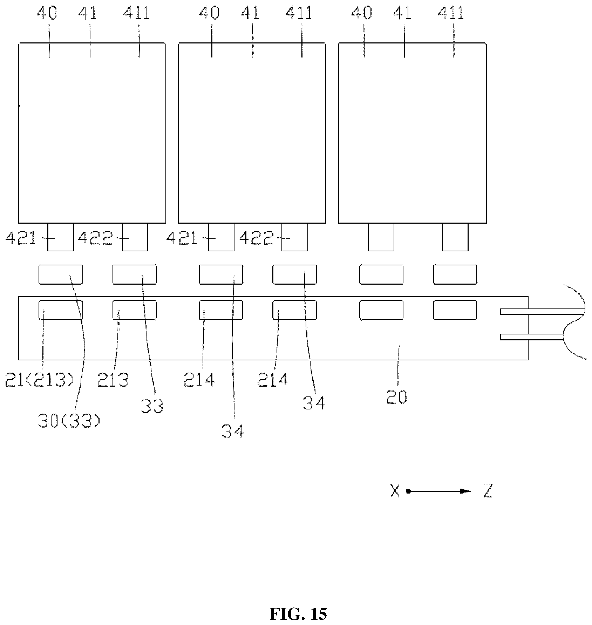

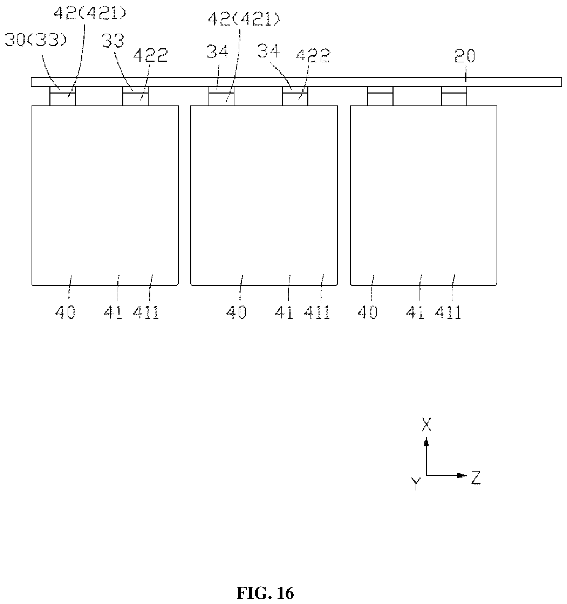

As shown in FIG. 14 to FIG. 16, in one embodiment, the connection region 21 includes a third connection region 213 and a fourth connection region 214, and the third connection region 213 and the fourth connection region 214 are arranged in the third direction Z.

The conductive member 30 includes a third conductive member 33 and a fourth conductive member 34, the third conductive member 33 is connected to the third connection region 213, and the fourth conductive member 34 is connected to the fourth connection region 214.

The battery assembly 100 includes two battery cells 40, the body portions 411 of the two battery cells 40 are arranged in the third direction Z, the welding sections 423 of one battery cell 40 are connected to the third conductive member 33, and the welding sections 423 of the other battery cell 40 are connected to the fourth conductive member 34, which is not only conductive to increasing the capacity of the battery assembly 100, but also conducive to using the space of the circuit board 20 in the third direction Z, thereby improving the space utilization of the circuit board 20.

In one embodiment, the number of third connection regions 213 is two, and the two third connection regions 213 are arranged in the third direction Z. The number of fourth connection regions 214 is two, and the two fourth connection regions 214 are arranged in the third direction Z. A positive terminal 421 of one battery cell 40 is connected to one third connection region 213, and a negative terminal 422 of the battery cell 40 is connected to the other third connection region 213. A positive terminal 421 of the other battery cell 40 is connected to one fourth connection region 214, and a negative terminal 422 of the battery cell 40 is connected to the fourth connection region 214.

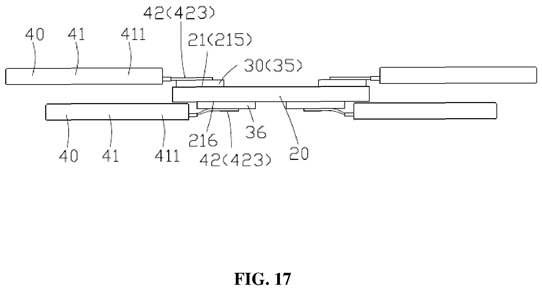

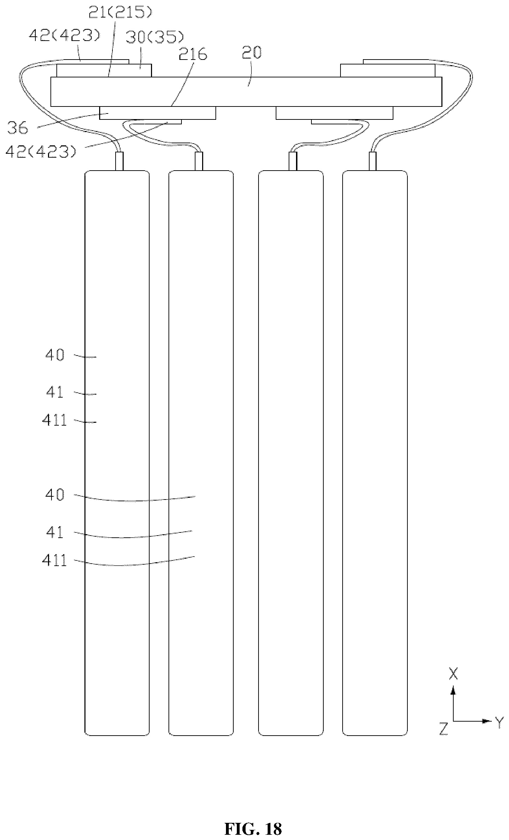

As shown in FIG. 17 to FIG. 18, in one embodiment, the connection region 21 includes a fifth connection region 215 and a sixth connection region 216, and the fifth connection region 215 and the sixth connection region 216 are respectively located on both sides of the circuit board 20 in the first direction X.

The conductive member 30 includes a fifth conductive member 35 and a sixth conductive member 36, the fifth conductive member 35 is connected to the fifth connection region 215, and the sixth conductive member 36 is connected to the sixth connection region 216.

The battery assembly 100 includes two battery cells 40, the body portions 411 of the two battery cells 40 are arranged in the second direction Y, the welding sections 423 of one battery cell 40 are connected to the fifth conductive member 35, and the welding sections of the other battery cell 40 are connected to the sixth conductive member 36, which is not only conductive to increasing the capacity of the battery assembly 100, but also conducive to using the space on both sides of the circuit board 20 in the first direction X, thereby improving the space utilization of the circuit board 20.

In one embodiment, the number of fifth connection regions 215 is two, and the two fifth connection regions 215 are arranged in the third direction Z. The number of sixth connection regions 216 is two, and the two sixth connection regions 216 are arranged in the third direction Z. A positive terminal 421 of one battery cell 40 is connected to one fifth connection region 215, and a negative terminal 422 of the battery cell 40 is connected to the other fifth connection region 215. A positive terminal 421 of the other battery cell 40 is connected to one sixth connection region 216, and a negative terminal 422 of the battery cell 40 is connected to the other sixth connection region 216.

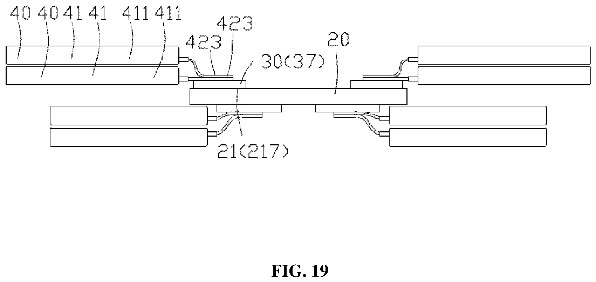

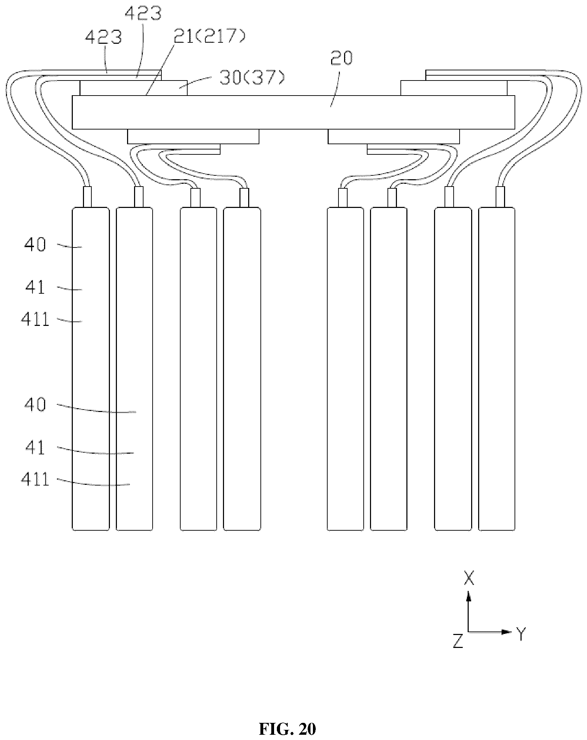

As shown in FIG. 19 and FIG. 20, in one embodiment, the connection region 21 includes a seventh connection region 217. The conductive member 30 includes a seventh conductive member 37, and the seventh conductive member 37 is connected with a seventh connection region 217.

The battery assembly 100 includes two battery cells 40, the body portions 411 of the two battery cells 40 are arranged in the second direction Y, and the welding sections 423 of the two battery cells 40 are connected to each other and stacked in the seventh conductive member 37 in the first direction X, which is not only conductive to increasing the capacity of the battery assembly 100, but also conducive to decreasing the influence of the connection region 21 on the board layout area of the circuit board 20, thereby improving the space utilization of the circuit board 20.

In one embodiment, the number of seventh connection regions 217 is two, and the two seventh connection regions 217 are arranged in the third direction Z. Positive terminals 421 of the two battery cells 40 are connected to one seventh connection region 217, negative terminals 422 of the two battery cells 40 are connected to the other seventh connection region 217, and the two battery cells 40 are connected in parallel.

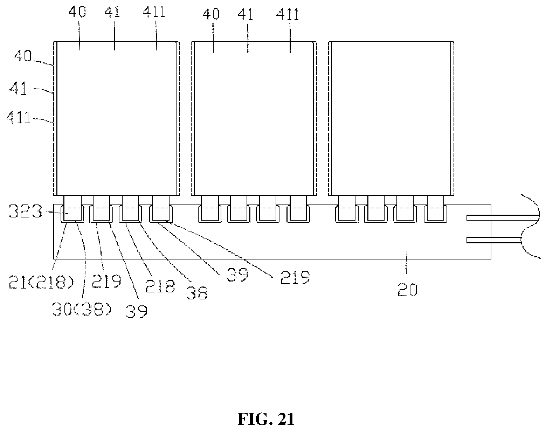

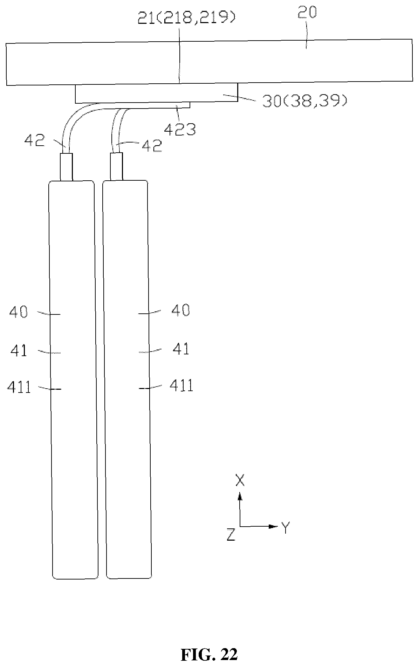

As shown in FIG. 21 and FIG. 22, in one embodiment, the connection region 21 includes an eighth connection region 218 and a ninth connection region 219.

The conductive member 30 includes an eighth conductive member 38 and a ninth conductive member 39, the eighth conductive member 38 is connected to the eighth connection region 218, and the ninth conductive member 39 is connected to the ninth connection region 219.

The battery assembly 100 includes two battery cells 40, the body portions 411 of the two battery cells 40 are arranged in the second direction Y, the welding sections 423 of one battery cell 40 are connected to the eighth conductive member 38, and the welding sections 423 of the other battery cell 40 are connected to the ninth conductive member 39.

In the first direction X, neither of projections of the welding sections 423 of the two battery cells 40 overlaps, which is not only conducive to increasing the capacity of the battery assembly 100, but also conducive to reducing the mutual influence between different welding sections 423, providing more electrical connections for the battery cells 40.

In one embodiment, the number of eighth connection regions 218 is two, and the two eighth connection regions 218 are arranged in the third direction Z. The number of ninth connection regions 219 is two, and the two ninth connection regions 219 are arranged in the third direction Z. A positive terminal 421 of one battery cell 40 is connected to one eighth connection region 218, and a negative terminal 422 of the battery cell 40 is connected to the other eighth connection region 218. A positive terminal 421 of the other battery cell 40 is connected to one ninth connection region 219, and a negative terminal 422 of the battery cell 40 is connected to the ninth connection region 219.

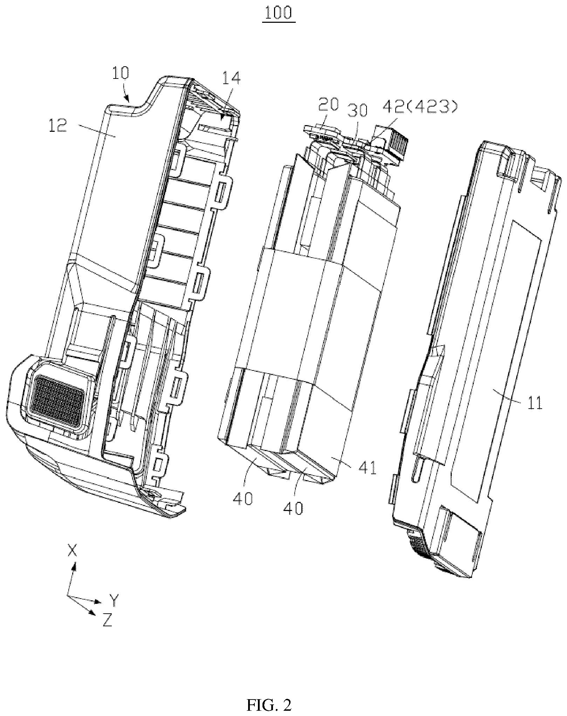

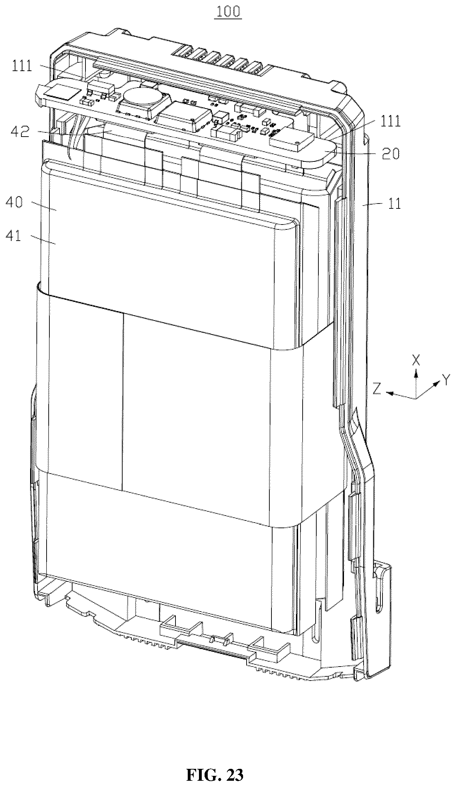

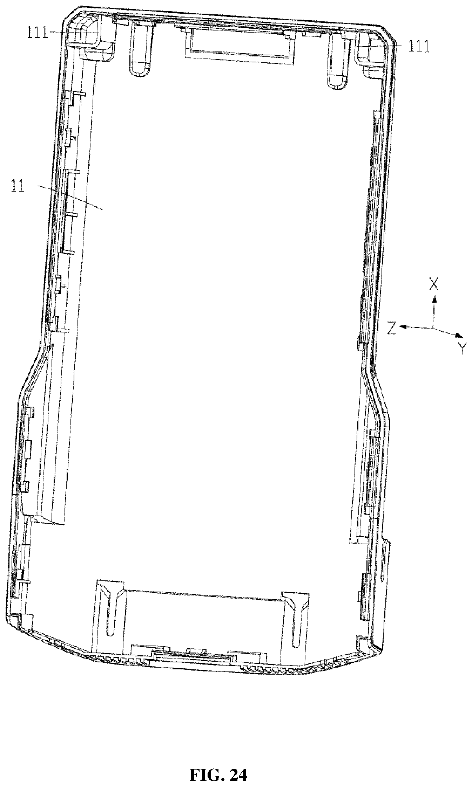

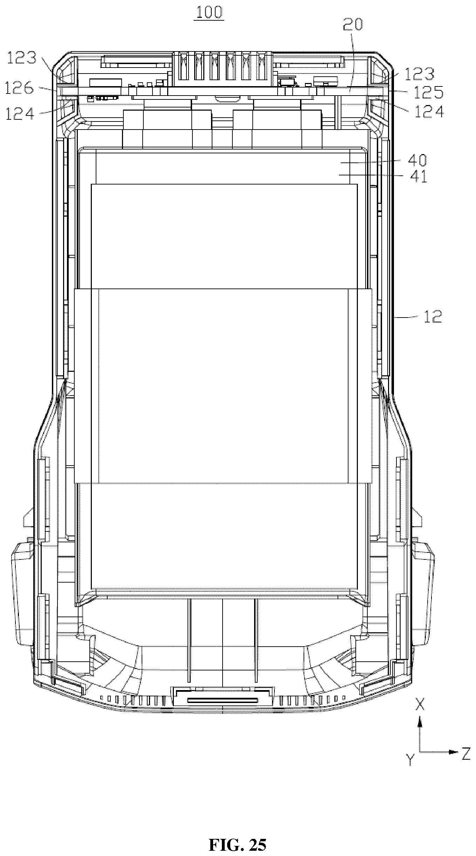

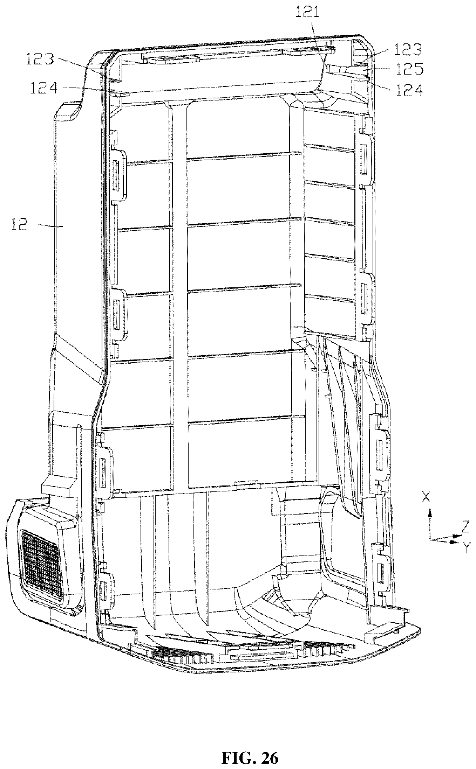

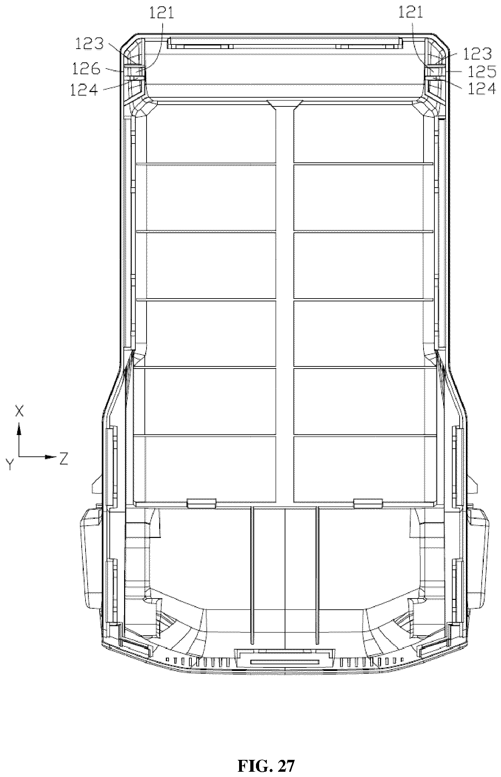

As shown in FIG. 2 and FIG. 23 to FIG. 27, in one embodiment, the shell 10 includes a first limiting portion 111 and a second limiting portion 121. In the second direction Y, the first limiting portion 111 and the second limiting portion 121 are arranged, and the part of the circuit board 20 is located between the first limiting portion 111 and the second limiting portion 121. The first limiting portion 111 and the second limiting portion 121 play a limiting role on the circuit board 20 to limit the movement of the circuit board 20 in the second direction Y or the direction opposite to the second direction Y, which is conducive to improving the seismic performance of the battery assembly 20, and also reducing the influence of shaking of the circuit board 20 on the electrode terminals 42, thereby improving the safety performance of the battery assembly 100.

In one embodiment, in the second direction Y, a first gap (not shown in the figures) exists between the circuit board 20 and the first limiting portion 111, and the first gap is configured to move the circuit board 20 in the second direction Y relative to the shell 10. When the battery cells 40 move relative to the shell 10, the first gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, in the second direction Y, a second gap (not shown in the figures) exists between the circuit board 20 and the second limiting portion 121, and the second gap is configured to move the circuit board 20 in the opposite direction of the second direction Y relative to the shell 10. When the battery cells 40 move relative to the shell 10, the second gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, one of the first limiting portion 111 and the second limiting portion 121 is disposed on the first housing 11, and the other of the first limiting portion 111 and the second limiting portion 121 is disposed on the second housing 12. Optionally, the first limiting portion 111 is located on the first housing 11, and the second limiting portion 121 is located on the second housing 12.

In one embodiment, the shell 10 further includes a third limiting portion 123 and a fourth limiting portion 124. In the first direction X, the third limiting portion 123 and the fourth limiting portion 124 are arranged, and the part of the circuit board 20 is disposed between the third limiting portion 123 and the fourth limiting portion 124. The third limiting portion 123 and the fourth limiting portion 124 can play a limiting role on the circuit board 20 to limit the movement of the circuit board 20 in the first direction X or a direction opposite to the first direction X, which is conducive to improving the seismic performance of the battery assembly 20, and also reducing the influence of shaking of the circuit board 20 on the electrode terminals 42, thereby improving the safety performance of the battery assembly 100.

In one embodiment, in the first direction X, a third gap (not shown in the figures) exists between the circuit board 20 and the third limiting portion 123, and the third gap 133 is configured to move the circuit board 20 in the first direction X relative to the shell 10. When the battery cells 40 move relative to the shell 10, the third gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, in the first direction X, a fourth gap (not shown in the figures) exists between the circuit board 20 and the fourth limiting portion 124, and the fourth gap 134 is configured to move the circuit board 20 in a direction opposite to the first direction X relative to the shell 10. When the battery cells 40 move relative to the shell 10, the fourth gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, both of the third limiting portion 123 and the fourth limiting portion 124 are located on the second housing 12.

In one embodiment, the shell 10 further includes a fifth limiting portion 125 and a sixth limiting portion 126. In the third direction Z, the fifth limiting portion 125 and the sixth limiting portion 126 are arranged, and the part of the circuit board 20 is disposed between the fifth limiting portion 125 and the sixth limiting portion 126. The fifth limiting portion 125 and the sixth limiting portion 126 can play a limiting role on the circuit board 20 to limit the movement of the circuit board 20 in the third direction Z or a direction opposite to the third direction Z, which is conducive to improving the seismic performance of the battery assembly 20, and also reducing the influence of shaking of the circuit board 20 on the electrode terminals 42, thereby improving the safety performance of the battery assembly 100.

In one embodiment, in the third direction Z, a fifth gap (not shown in the figures) exists between the circuit board 20 and the fifth limiting portion 125, and the fifth gap is configured to move the circuit board 20 in the third direction Z relative to the shell 10. When the battery cells 40 move relative to the shell 10, the fifth gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, in the third direction Z, a sixth gap (not shown in the figures) exists between the circuit board 20 and the sixth limiting portion 126, and the sixth gap is configured to move the circuit board 20 in a direction opposite to the third direction Z relative to the shell 10. When the battery cells 40 move relative to the shell 10, the sixth gap allows the circuit board 20 to move relative to the shell 10, which is conducive to reducing the pulling force of the movement of the battery cells 40 on the electrode terminals 42 and reducing the risk of the damage of the electrode terminals 42.

In one embodiment, both of the fifth limiting portion 125 and the sixth limiting portion 126 are located on the second housing 12.

To sum up, in the battery assembly 100 of this application, the welding sections 423 of the electrode terminals 42 are electrically connected to the circuit board 20 by being welded with the conductive member 30, the welding sections 423, the conductive member 30 and the connection region 21 of the circuit board 20 are arranged in the first direction X, and viewed in a direction X' opposite to the first direction X, the circuit board 20 covers the welding sections 423, so that the electrode terminals 42 do not need to pass through the circuit 20 board when being connected to the circuit board 20, but may be connected with the conductive member 30 on one side of the circuit board 20, which is not only conducive to simplifying the connection process between the electrode terminal 42 and the circuit board 20, but also improving the assembly efficiency of the battery assembly 100. Via holes are decreased on the circuit board 20, which is conductive to improving the structural strength of the circuit board 20 and increasing the board layout area of the circuit board 20.

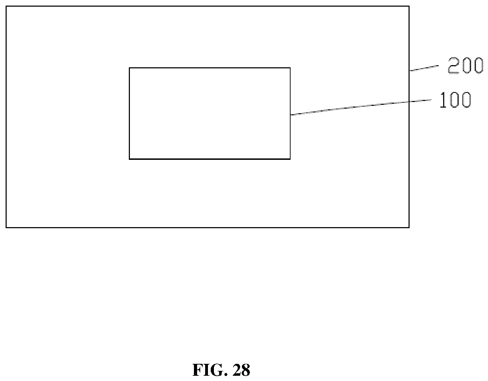

As shown in FIG. 28, an embodiment of this application further provides an electric device 200, including the battery assembly 100 described in any of the above embodiments.

In the above-mentioned electric device 200, the welding sections 423 of the electrode terminals 42 on the battery cells 40 are electrically connected to the circuit board 20 by being welded with the conductive member 30, the welding sections 423, the conductive member 30 and the connection region 21 of the circuit board 20 are arranged in the first direction X, and viewed in a direction X' opposite to the first direction X, the circuit board 20 covers the welding sections 423, so that the electrode terminals 42 do not need to pass through the circuit 20 board when being connected to the circuit board 20, but may be connected with the conductive member 30 on one side of the circuit board 20, which is not only conducive to simplifying the connection process between the electrode terminal 42 and the circuit board 20 and improving the assembly efficiency of the battery assembly 100, but also reducing the influence of assembly cost of the battery assembly 100 on the electric device 200. Via holes are decreased on the circuit board 20, which is conductive to improving the structural strength of the circuit board 20 and increasing the board layout area of the circuit board 20, improving the space utilization of the battery assembly 100, and reducing the influence of the volume of the battery assembly 100 on the electric device 200.

In one embodiment, the electric device 200 includes, but is not limited to, an unmanned aerial vehicle, an electric two-wheeler, a household appliance, or an electric tool.

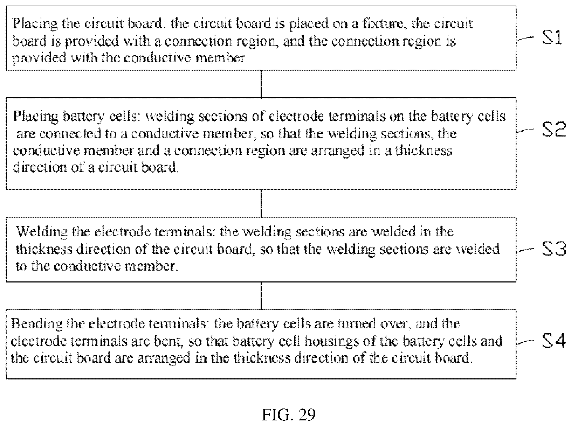

As shown in FIG. 29, an embodiment of this application further provides a battery assembly preparation method, used for preparing the battery assembly described in any of the above embodiments. The method includes the steps:
S1: placing a circuit board: the circuit board is placed on a fixture, the circuit board is provided with a connection region, and the connection region is provided with a conductive member;
S2: placing battery cells: welding sections of electrode terminals on the battery cells are connected to the conductive member, so that the welding sections, the conductive member and the connection region are arranged in a thickness direction of the circuit board;
S3: welding the electrode terminals: the welding sections are welded in a thickness direction of the circuit board, so that the welding sections are welded to the conductive member; and
S4: bending the electrode terminals: the battery cells are turned over, and the electrode terminals are bent, so that battery cell housings of the battery cells and the circuit board are arranged in the thickness direction of the circuit board.

In the above-mentioned the battery assembly preparation method, the welding sections of the electrode terminals, the conductive member and the connection region of the circuit board are arranged in the thickness direction of the circuit board, and the welding sections are welded, so that the circuit board does not need to be provided with via holes to allow the electrode terminals to perforate for welding, which is not only conducive to simplifying the connection process between the electrode terminals and the circuit board and improving the assembly efficiency of the battery assembly, but also conducive to improving the structural strength of the circuit board and increasing the board layout area of the circuit board, thereby improving the space utilization of the battery assembly.

In one embodiment, a thickness of the conductive member is greater than or equal to 0.3 mm and less than or equal to 2 mm in the thickness direction of the circuit board. Through the above-mentioned battery assembly preparation method, the thickness of the conductive member can be appropriately increased without affecting the welding effect, which is conducive to improving the current-carrying capacity of the conductive member and relieving the temperature rise problem of the conductive member, and improving the over-current performance between the electrode terminals and the circuit board.

The foregoing descriptions are merely specific implementations of this application, but are not intended to limit the protection scope of this application. Any variation or replacement within the technical scope disclosed in this application shall fall within the disclosure scope of this application.

## Claims

1. A battery assembly (100), comprising:
a circuit board (20), provided with a connection region (21);
a conductive member (30), connected with the connection region (21); and
battery cells (40);
each battery cell (40) comprising a battery cell housing (41) and electrode terminals (42), the electrode terminals (42) extending out of the battery cell housing (41), parts of the electrode terminals (42) extending out of the battery cell housing (41) comprise welding sections (423), and the welding sections (423) are welded with the conductive member (30);
the welding sections (423), the conductive member (30) and the connection region (21) are arranged in a first direction (X); and
viewed in an opposite direction of the first direction (X), the circuit board (20) covering the welding sections (423).

2. The battery assembly (100) according to claim 1, **characterized in that**,
the battery cell housing (41) comprises a body portion (411) and a top sealing portion (4121) connected to each other, the electrode terminals (42) extend out of the top sealing portion (4121), the body portion (411) comprises a first side face (4111) and a second side face (4112), the first side face (4111) and the second side face (4112) are respectively located on two opposite sides of the body portion (411) in a second direction (Y), and the second direction (Y) is perpendicular to the first direction (X);
in the second direction (Y), a distance between the top sealing portion (4121) and the first side face (4111) is greater than a distance between the top sealing portion (4121) and the second side face (4112); and
the battery assembly (100) comprises two battery cells (40), and the first side faces (4111) of the two battery cells (40) face each other in the second direction (Y).

3. The battery assembly (100) according to claim 2, **characterized in that**,
the body portion (411) further comprises a first end face (4113) and a second end face (4114), the first end face (4113) and the second end face (4114) are respectively located on two opposite sides of the top sealing portion (4121) in the second direction (Y), the first end face (4113) is connected to the first side face (4111), and the second end face (4114) is connected to the second side face (4112); and
in the first direction (X), a projection of the welding sections (423) overlaps a projection of the first end face (4113), and the projection of the welding sections (423) is apart from a projection of the second end face (4114).

4. The battery assembly (100) according to claim 1, **characterized in that**,
the battery assembly (100) further comprises a shell (10), the shell (10) is provided with an accommodation cavity (14); the circuit board (20), the conductive member (30) and the battery cells (40) are located in the accommodation cavity (14), and the shell (10) comprises a first limiting portion (111) and a second limiting portion (121);
the first limiting portion (111) and the second limiting portion (121) are arranged in a second direction (Y), a part of the circuit board (20) is located between the first limiting portion (111) and the second limiting portion (121), and the second direction (Y) is perpendicular to the first direction (X);
in the second direction (Y), a first gap is provided between the circuit board (20) and the first limiting portion (111), and the first gap is configured to move the circuit board (20) relative to the shell (10) in the second direction (Y) or a direction opposite to the second direction (Y); and/or
in the second direction (Y), a second gap is provided between the circuit board (20) and the second limiting portion (121), and the second gap is configured to move the circuit board (20) relative to the shell (10) in the second direction (Y) or the direction opposite to the second direction (Y).

5. The battery assembly (100) according to claim 4, **characterized in that**,
the shell (10) further comprises a third limiting portion (123) and a fourth limiting portion (124);
the third limiting portion (123) and the fourth limiting portion (124) are arranged in the first direction (X), and a part of the circuit board (20) is located between the third limiting portion (123) and the fourth limiting portion (124);
in the first direction (X), a third gap is provided between the circuit board (20) and the third limiting portion (123), and the third gap is configured to move the circuit board (20) relative to the shell (10) in the first direction (X) or the direction opposite to the first direction (X); and/or
in the first direction (X), a fourth gap is provided between the circuit board (20) and the fourth limiting portion (124), and the fourth gap is configured to move the circuit board (20) relative to the shell (10) in the first direction (X) or the direction opposite to the first direction (X).

6. The battery assembly (100) according to claim 5, **characterized in that**,
the shell (10) further comprises a fifth limiting portion (125) and a sixth limiting portion (126);
the fifth limiting portion (125) and the sixth limiting portion (126) are arranged in a third direction (Z), a part of the circuit board (20) is located between the fifth limiting portion (125) and the sixth limiting portion (126), and the third direction (Z) is perpendicular to the first direction (X) and the second direction (Y);
in the third direction (Z), a fifth gap is provided between the circuit board (20) and the fifth limiting portion (125), and the fifth gap is configured to move the circuit board (20) relative to the shell (10) in the third direction (Z) or a direction opposite to the third direction (Z); and/or
in the third direction (Z), a sixth gap is provided between the circuit board (20) and the sixth limiting portion (126), and the sixth gap is configured to move the circuit board (20) relative to the shell (10) in the third direction (Z) or the direction opposite to the third direction (Z).

7. The battery assembly (100) according to any one of claims 1 to 6, **characterized in that**,
the connection region (21) comprises a first connection region (211) and a second connection region (212), the first connection region (211) and the second connection region (212) are arranged in the second direction (Y), and the second direction (Y) is perpendicular to the first direction (X);
the conductive member (30) comprises a first conductive member (31) and a second conductive member (32), the first conductive member (31) is connected to the first connection region (211), and the second conductive member (32) is connected to the second connection region (212); and
the battery assembly (100) comprises the two battery cells (40), the battery cell housings (41) of the two battery cells (40) are arranged in the second direction (Y), the welding sections (423) of one battery cell (40) are connected to the first conductive member (31), and the welding sections (423) of the other battery cell (40) are connected to the second conductive member (32).

8. The battery assembly (100) according to claim 1, **characterized in that**,
the connection region (21) comprises a third connection region (213) and a fourth connection region (214), the third connection region (213) and the fourth connection region (214) are arranged in a third direction (Z), and the third direction (Z) is perpendicular to the first direction (X);
the conductive member (30) comprises a third conductive member (33) and a fourth conductive member (34), the third conductive member (33) is connected to the third connection region (213), and the fourth conductive member (34) is connected to the fourth connection region (214); and
the battery assembly (100) comprises the two battery cells (40), the battery cell housings (41) of the two battery cells (40) are arranged in the third direction (Z), the welding sections (423) of one battery cell (40) are connected to the third conductive member (33), and the welding sections (423) of the other battery cell (40) are connected to the fourth conductive member (34).

9. The battery assembly (100) according to claim 1, **characterized in that**,
the connection region (21) comprises a fifth connection region (215) and a sixth connection region (216), and the fifth connection region (215) and the sixth connection region (216) are respectively located on two sides of the circuit board (20) in the first direction (X);
the conductive member (30) comprises a fifth conductive member (35) and a sixth conductive member (36), the fifth conductive member (35) is connected to the fifth connection region (215), and the sixth conductive member (36) is connected to the sixth connection region (216); and
the battery assembly (100) comprises the two battery cells (40), the battery cell housings (41) of the two battery cells (40) are arranged in a second direction (Y), the welding sections (423) of one battery cell (40) are connected to the fifth conductive member (35), the welding sections (423) of the other battery cell (40) are connected to the sixth conductive member (36), and the second direction (Y) is perpendicular to the first direction (X).

10. The battery assembly (100) according to claim 1, **characterized in that**,
the connection region (21) comprises a seventh connection region (217);
the conductive member (30) comprises a seventh conductive member (37), and the seventh conductive member (37) is connected to the seventh connection region (217); and
the battery assembly (100) comprises the two battery cells (40), the battery cell housings (41) of the two battery cells (40) are arranged in a second direction (Y), the second direction (Y) is perpendicular to the first direction (X), and the welding sections (423) of the two battery cells (40) are connected to each other and stacked in the seventh conductive member (37) in the first direction (X).

11. The battery assembly (100) according to claim 1, **characterized in that**,
the connection region (21) comprises an eighth connection region (218) and a ninth connection region (219);
the conductive member (30) comprises an eighth conductive member (38) and a ninth conductive member (39), the eighth conductive member (38) is connected to the eighth connection region (218), and the ninth conductive member (39) is connected to the ninth connection region (219);
the battery assembly (100) comprises the two battery cells (40), the battery cell housings (41) of the two battery cells (40) are arranged in a second direction (Y), the welding sections (423) of one battery cell (40) are connected to the eighth conductive member (38), the welding sections (423) of the other battery cell (40) are connected to the ninth conductive member (39), and the second direction (Y) is perpendicular to the first direction (X); and
neither of projections of the welding sections (423) of the two battery cells (40) overlaps in the first direction (X).

12. The battery assembly (100) according to any one of claims 1 to 11, **characterized in that**, the circuit board (20) is a rigid printed circuit board.

13. The battery assembly (100) according to any one of claims 1 to 11, **characterized in that**, in the first direction (X), a thickness of the conductive member (30) is d1, and 0.3 mm ≤ d1 ≤ 2 mm.

14. An electric device (200), **characterized by** comprising the battery assembly (100) according to any one of claims 1 to 13.

15. A method for preparing the battery assembly (100) according to any one of claims 1 to 13, and the method comprising the steps:
placing a circuit board (20): the circuit board (20) is placed on a fixture, the circuit board (20) is provided with a connection region (21), and the connection region (21) is provided with a conductive member (30);
placing battery cells (40): welding sections (423) of electrode terminals (42) on the battery cells (40) are connected to the conductive member (30), so that the welding sections (423), the conductive member (30) and the connection region (21) are arranged in a thickness direction of the circuit board (20);
welding the electrode terminals (42): the welding sections (423) are welded in the thickness direction of the circuit board (20), so that the welding sections (423) are welded to the conductive member (30); and
bending the electrode terminals (42): the battery cells (40) are turned over, and the electrode terminals (42) are bent, so that battery cell housings (41) of the battery cells (40) and the circuit board (20) are arranged in a thickness direction of the circuit board (20).
